**Europäisches Patentamt**

**European Patent Office**

**Office européen des brevets**

(19)

(11) Veröffentlichungsnummer: **0 269 906 B1**

(12) # EUROPÄISCHE PATENTSCHRIFT

(45) Veröffentlichungstag der Patentschrift: **11.09.91**

(51) Int. Cl.⁵: **B62K 19/34**

(21) Anmeldenummer: **87116379.6**

(22) Anmeldetag: **06.11.87**

(54) **Tretlagereinheit zum Einbau in Tretlagergehäuse von Fahrrädern oder dergleichen.**

(30) Priorität: **05.12.86 DE 3641647**

(43) Veröffentlichungstag der Anmeldung:
**08.06.88 Patentblatt 88/23**

(45) Bekanntmachung des Hinweises auf die
Patenterteilung:
**11.09.91 Patentblatt 91/37**

(84) Benannte Vertragsstaaten:
**DE FR GB IT**

(56) Entgegenhaltungen:
**FR-A- 437 083**
**FR-A- 824 618**
**FR-A- 2 355 202**
**FR-A- 2 454 952**
**GB-A- 2 135 399**

(73) Patentinhaber: **Hoffmann, Joachim**
**Nöhstrasse 16**
**W-5800 Hagen(DE)**

(72) Erfinder: **Hoffmann, Joachim**
**Nöhstrasse 16**
**W-5800 Hagen(DE)**

(74) Vertreter: **Sturies, Herbert et al**
**Patentanwälte Dr. Ing. Dipl. Phys. Herbert**
**Sturies Dipl. Ing. Peter Eichler Postfach 20**
**12 42**
**W-5600 Wuppertal 2(DE)**

EP 0 269 906 B1

# Beschreibung

Die Erfindung bezieht sich auf eine Tretlagereinheit zum Einbau in Tretlagergehäuse von Fahrrädern oder dergleichen, mit einem aus einer langen und einer darauf endseitig aufzusetzenden, kurzen Winkelhülse bestehenden, in das Tretlagergehäuse einzupressenden oder einzuschraubenden Einbaugehäuse und einem in dessen langer Winkelhülse zwischen damit fest verbundenen, nach innen vorspringenden Endflanschen untergebrachten Wälzlager für die das Einbaugehäuse zentral durchsetzende Tretlagerwelle.

Tretlagereinheiten obiger Art sind z. B. durch die DE-OS 34 07 120 und die DE-OS 34 34 314 bekannt. Sie gewährleisten einen leichten Einbau, da sie im einbaufertigen Zustand angeliefert werden können und der Monteur dazu lediglich zwei Teile in das Tretlagergehäuse bzw. den entsprechend ausgebildeten Rahmenteil des Fahrrades oder dergleichen einzuschrauben oder einzupressen hat, nämlich zunächst die lange Winkelhülse mit der darin gelagerten Tretlagerwelle und danach die kurze Winkelhülse, die das bis dahin freie Ende der langen Winkelhülse mit dem entsprechenden Rahmenende zu verbinden erlaubt. Bei diesen bekannten einbaufertigen Tretlagereinheiten besteht das Wälzlager für die Tretlagerwelle aus im aus Kunststoff gefertigten Einbaugehäuse beidendig angeordneten Kugellagern, deren Kugeln zwischen an der Tretlagerwelle in entsprechend axialem Abstand voneinander angeformten einerseits und im Kunststoff-Einbaugehäuse eingebetteten bzw. damit fest verbundenen Lagerschalen andererseits laufen. Der Einbau und die Montage dieser Kugellager, insbesondere ihrer Kugellagerschalen bedingen aber noch einen entsprechenden Aufwand. Das gilt auch für andere bekannte Tretlager, die mit entsprechend angeordneten Rillenkugellagern versehen sind. Auch sind der Beanspruchbarkeit der mit solchen Kugellagern ausgerüsteten einbaufertigen Tretlagereinheiten noch vergleichsweise enge Grenzen gesetzt.

Der Erfindung liegt die Aufgabe zugrunde, eine einbaufertige Tretlagereinheit zu schaffen, die die vorerwähnten Mängel nicht aufweist, vielmehr einfacher gebaut und leichter zu montieren ist sowie darüberhinaus eine noch höher beanspruchbare Lagerung der Tretlagerwelle gewährleistet. Diese Aufgabe wird ausgehend von einer gattungsgemäß beschaffenen Tretlagereinheit erfindungsgemäß dadurch gelöst, daß das Wälzlager aus einem unmittelbar zwischen der Tretlagerwelle und der langen Winkelhülse gelegenen, sich nahezu über deren gesamte Länge erstreckenden Nadellager besteht. Hierdurch kommt man zu einer breitflächigen soliden Lagerung der Tretlagerwelle, bei zugleich einfacherem Aufbau und leichter Montage, da besondere Wälzlagerschalen dafür entfallen.

Die Lagernadeln und die jeweils zwischen ihnen liegenden Käfig-Stäbchen liegen vorteilhaft zwischen auf der Tretlagerwelle in entsprechend gelegenem Abstand angeordneten Distanzringen, die ihrerseits in entsprechend geformte innere Randnuten an den mit der langen Winkelhülse fest verbundenen Endflanschen hineinragen. Diese Distanzringe bestehen zweckmäßig aus in Ringnuten der Tretlagerwelle hineinragenden Kunststoffringen, die darauf fest aufgespritzt sein können. Eine weitergehende axiale Anschlagsicherung der Lagernadeln ist weder notwendig noch erwünscht, damit die Lagernadeln noch ein gewisses axiales Bewegungsspiel behalten, das deren thermische Ausdehnung zuläßt, ohne eine genaue Einstellung oder auch nur Nachstellbarkeit des Lagers zu erfordern.

Vorteilhaft bestehen die kurze und lange Winkelhülse sowie deren Endflansche aus Kunststoff, wobei der eine Endflansch an der Winkelhülse angeformt ist, dagegen der andere Endflansch nach Einbau der Tretlagerwelle und des Nadellagers an der Winkelhülse angeschweißt ist.

In der Zeichnung sind zwei Ausführungsbeispiele erfindungsgemäß ausgebildeter Tretlagereinheiten dargestellt.
Dabei zeigt

Fig. 1   eine in das Tretlagergehäuse eingebaute Tretlagereinheit in axialem Schnitt,

Fig. 2   eine Seitenansicht zur Fig. 1,

Fig. 3   die eine Hälfte der einbaufertigen Tretlagereinheit in axialem Schnitt und in vergrößerter Darstellung und

Fig. 4   einen Schnitt nach der Linie IV-IV der Fig. 3.

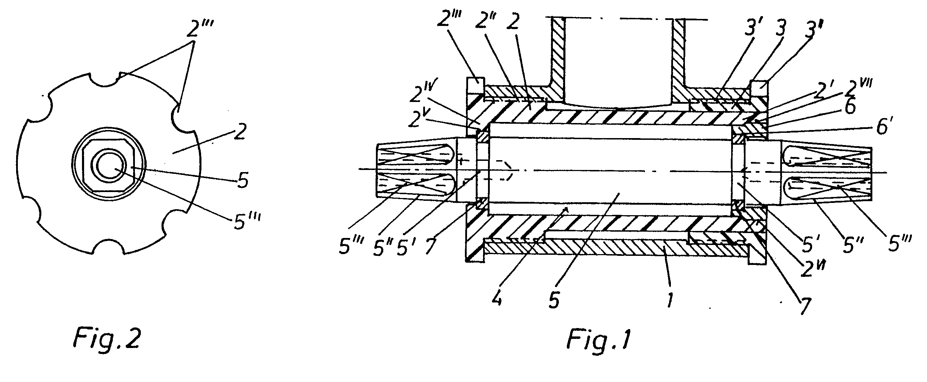

Die in Fig. 1 dargestellte, in das Tretlagergehäuse 1 eines Fahrrades oder ähnlichen Fahrzeugs eingebaute Tretlagereinheit besteht im wesentlichen aus der langen Winkelhülse 2 und der auf deren außen glattes Ende 2' aufzusetzenden kurzen Winkelhülse 3, dem Nadellager 4 und der Tretlagerwelle 5. Die zusammen das Einbaugehäuse bildende lange und kurze Winkelhülse 2 bzw. 3 sind im vorliegenden Falle mit Außengewinde 2" bzw. 3' versehen, über die sie in das mit entsprechendem Innengewinde versehene Tretlagergehäuse 1 des Fahrradrahmens eingeschraubt sind. Dafür sind die aus hochfestem Kunststoff, z.B. glasfaserverstärktem Polyamid bestehenden Winkelhülsen 2, 3 an ihrem Außenumfang mit Aussparungen 2‴ bzw. 3" zum Ansetzen eines entsprechenden Schraubschlüssels versehen. Es versteht sich aber, daß die beiden Kunststoff-Winkelhülsen 2, 3, wie bekannt, auch mit Preßsitz im Tretlagergehäuse 1 befestigt werden können.

An der langen Winkelhülse 2 ist an ihrem die Schlüsselaussparungen 2‴ tragenden, umfangsmäßig entsprechend verbreiterten Ende ein nach innen vorspringender Endflansch 2$^{IV}$ angeformt, während das andere Ende 2' der langen Winkelhülse 2 durch einen nach Einbau des Nadellagers 4 und der Tretlagerwelle 5 eingesetzen Endflansch 6 in Gestalt eines T-förmig profilierten Ringes verschlossen ist. Der Endflansch 2$^{IV}$ wie auch der Ring 6 sind mit inneren Randnuten 2$^{V}$ bzw 6' versehen. In diese Randnuten ragen die auf der Tretlagerwelle 5 in entsprechendem axialem Abstand voneinander angeordneten Distanzringe 7 hinein. Diese bestehen gleichfalls aus Kunststoff, der in in der Tretlagerwelle 5 eingeformte Ringnuten 5' fest ein- bzw. aufgespritzt ist. Die aus korrosionsgeschütztem Stahl bestehende Tretlagerwelle 5 ist beidendig mit konischen Vierkanten 5" versehen, auf denen die Tretkurbeln befestigt werden. Ebensogut kann die Tretkurbelbefestigung aber auch über entsprechende Keilverbindungen erfolgen. Beide Aufsteckenden der Lagerwelle 5 sind weiterhin noch mit Gewindebohrungen 5''' zum Eindrehen der die Tretkurbeln axial sichernden Schrauben versehen.

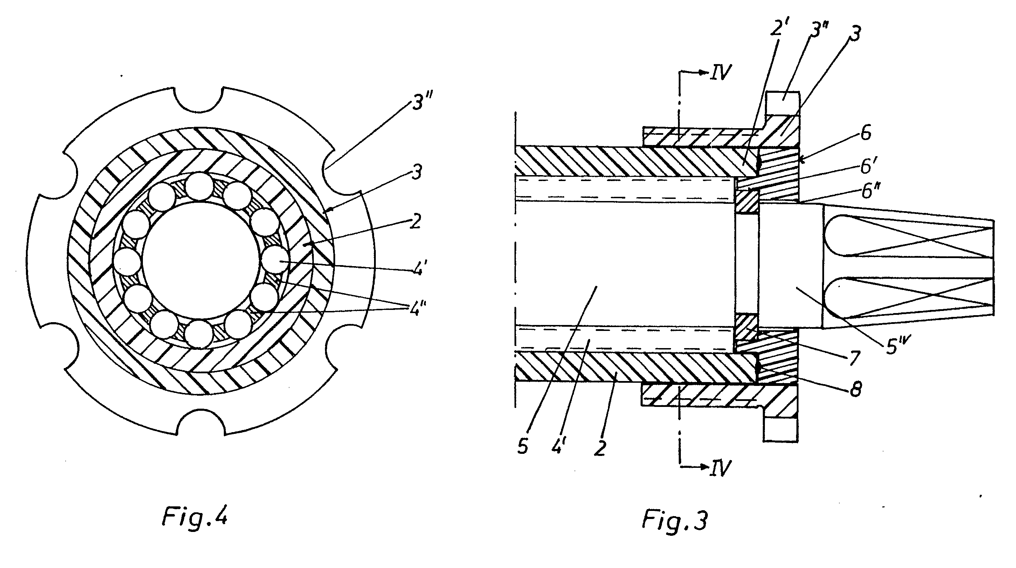

Unmittelbar zwischen der Tretlagerwelle 5 und der langen Winkelhülse 2 sowie zwischen den damit fest verbundenen Endflanschen 2$^{IV}$ bzw 6 ist das Nadellager 4 untergebracht, das, wie insbesondere Fig. 4 zeigt, aus den sich nahezu über die gesamte Breite des Einbaugehäuses erstreckenden Lagernadeln 4' und den jeweils dazwischen gelegenen Käfig-Stäbchen 4" besteht. Hierdurch wird eine solide Lagerung der Tretlagerwelle im Einbaugehäuse gewährleistet, wobei die Lagernadeln 4' ausreichendes axiales Bewegungsspiel zwischen den auf der Tretlagerwelle 5 vorhandenen Distanzringen 7 haben, das ein genaues Einstellen oder Nachstellen auch nach längerer Betriebsdauer entbehrlich macht.

Zur Montage der Tretlagereinheit wird zunächst die Tretlagerwelle 5 mit den Nadeln 4' und den Käfig-Stäbchen 4" des Nadellagers 4 in die lange Winkelhülse 2 gesteckt, bis der entsprechende Distanzring 7 auf der Welle 5 in der Randnut 2$^{V}$ des an der langen Winkelhülse 2 angeformten Endflansches 2$^{IV}$ zum Anschlag kommt. Sodann wird der T-förmig profilierte Ring 6 in die am gegenüberliegenden Ende 2' der langen Winkelhülse 2 vorhandene Ringaussparung 2$^{VII}$ eingesetzt und darin verschweißt. Dadurch kommt man zu einer einbaufertigen Tretlagereinheit, die als solche in das Tretlagergehäuse 1 eingeschraubt werden kann. Dabei wird zunächst die lange Winkelhülse 2 in das Rahmengehäuse 1 eingeschraubt, während danach die kurze Winkelhülse 3, die das Ende 2' der langen Winkelhülse 2 satt sitzend umschließt, in das Rahmengehäuse 1 eingeschraubt wird.

Das in Fig. 3 und 4 dargestellte Ausführungsbeispiel ist von grundsätzlich gleicher Bauart, wobei die übereinstimmenden Bauteile mit den gleichen Bezugzeichen versehen sind. Abweichend und zugleich vorteilhafter ist hier aber der T-förmig profilierte Ring 6 auf das ihm zugewandte Ende 2' der langen Winkelhülse 2 stumpf aufgeschweißt. Der Ring 6 schließt außen bündig mit der langen Winkelhülse 2 ab. Die beispielsweise durch Ultraschall-Schweißung erzeugte Schweißnaht ist mit 8 bezeichnet. Vorteilhaft ist für diese Schweißverbindung am Stirnende 2' der langen Winkelhülse 2 eine ringsum laufende Erhebung vorgesehen, die beim Schweißen entsprechend wegschmilzt und dabei eine geschlossen ringsumlaufende Schweißnaht 8 ergibt. Weiterhin ist in Fig. 3 noch zu erkennen, daß an dem den einen Endflansch bildenden T-förmig profilierten Ring 6 noch eine bis an den Bund 5$^{IV}$ der Tretlagerwelle 5 heranreichende Dichtlippe 6" angeformt ist. Eine entsprechend angeformte Dichtlippe kann auch am Endflansch 2$^{IV}$ der langen Winkelhülse 2 vorhanden sein, so daß das Innere der Tretlagereinheit wirksam gegen Verschmutzung, Feuchtigkeitseinflüsse u.dgl. abgedichtet ist.

Im Rahmen der vorliegenden Erfindung sind mancherlei Abwandlungen möglich. So muß der Endflansch-Ring 6 mit der langen Winkelhülse 2 nicht unbedingt durch Schweißung verbunden sein. Vielmehr kann der Ring 6 in die Hülse 2 grundsätzlich auch eingeschraubt sein, wenngleich eine solche Schraubverbindung tunlichst schwer, besser noch gar nicht lösbar sein sollte.

**Patentansprüche**

1.  Tretlagereinheit zum Einbau in Tretlagergehäuse von Fahrrädern oder dergleichen, mit einem aus einer langen und einer darauf endseitig aufzusetzenden, kurzen Winkelhülse bestehenden, in das Tretlagergehäuse einzupressenden oder einzuschraubenden Einbaugehäuse und einem in dessen langer Winkelhülse zwischen damit fest verbundenen, nach innen vorspringenden Endflanschen untergebrachten Wälzlager für die das Einbaugehäuse zentral durchsetzende Tretlagerwelle, **dadurch gekennzeichnet**, daß das Wälzlager aus einem unmittelbar zwischen der Tretlagerwelle (5) und der langen Winkelhülse (2) gelegenen, sich nahezu über deren gesamte Länge erstreckenden Nadellager (4) besteht.

2.  Tretlagereinheit nach Anspruch 1, **dadurch gekennzeichnet**, daß die Lagernadeln (4') und die jeweils zwischen ihnen liegenden Käfig-Stäbchen (4") zwischen auf der Tretlagerwelle (5) in entsprechend gelegenem Abstand angeordneten Distanzringen (7) liegen, die ihrerseits in entsprechend geformte innere Randnuten (2$^{V}$ bzw. 6') an den mit der Winkelhülse (2) fest verbundenen Endflanschen ($2^{IV}$ bzw. 6) hineinragen.

3. Tretlagereinheit nach Anspruch 2, **dadurch gekennzeichnet**, daß die Distanzringe aus in Ringnuten (5') der Tretlagerwelle (5) hineinragenden Kunststoffringen (7) bestehen.

4. Tretlagereinheit nach Anspruch 3, **dadurch gekennzeichnet**, daß die Kunststoffringe (7) auf die Tretlagerwelle (5) fest aufgespritzt sind.

5. Tretlagereinheit nach einem der Ansprüche 1 bis 4, **dadurch gekennzeichnet**, daß die kurze und lange Winkelhülse (3 bzw. 2) sowie deren Endflansche ($2^{IV}$, 6) aus Kunststoff bestehen, wobei der eine Endflansch ($2^{IV}$) an der Winkelhülse (2) angeformt ist, dagegen der andere Endflansch (6) nach Einbau der Tretlagerwelle (5) und des Nadellagers (4) an der Winkelhülse (2) angeschweißt ist.

6. Tretlagereinheit nach Anspruch 5, **dadurch gekennzeichnet**, daß der angeschweißte Endflansch aus einem T-förmig profilierten Ring (6) besteht, der in eine am zugewandten Ende (2') der langen Winkelhülse (2) vorhandene Ringnut ($2^{VI}$) hineinragt. (Fig. 1).

7. Tretlagereinheit nach Anspruch 5, **dadurch gekennzeichnet**, daß der angeschweißte Endflansch aus einem T-förmig profilierten Ring (6) besteht, der auf das zugewandte Ende (2') der langen Winkelhülse (2) stumpf aufgeschweißt ist und außen mit der langen Winkelhülse (2) bündig verläuft. (Fig. 3).

8. Tretlagereinheit nach einem der Ansprüche 1 bis 7, **dadurch gekennzeichnet**, daß an den Endflanschen ($2^{IV}$, 6) bis an die Tretlagerwelle (5) heranreichende Dichtlippen (6″) angeformt sind.

**Claims**

1. Pedal bearing unit for mounting in a pedal bearing housing of bicycles or the like, comprising a unit housing arranged to be pressed or screwed into the pedal bearing housing and comprising a long crank sleeve and a short crank sleeve which is set on one end of the long sleeve, and a rolling bearing which is mounted in said long crank sleeve between inwardly projecting end flanges which are rigidly connected to the sleeve, said rolling bearing receiving the pedal bearing axle which extends centrally through the unit housing, characterised in that the rolling bearing com

prises a needle bearing (4) extending approximately over the full length of the sleeve and which is positioned immediately between the pedal bearing axle (5) and the long crank sleeve (2).

2. Pedal bearing unit according to claim 1, characterised in that the bearing needles (4') and the cage elements (4″) lying between the respective needles are arranged between spacer rings (7) which are arranged on the pedal bearing axle (5) at appropriate distances apart, said spacer rings themselves projecting into correspondingly shaped internal peripheral grooves ($2^V$ and 6') in the end flanges ($2^{IV}$ and 6) connected rigidly to the crank sleeve (2).

3. Pedal bearing unit according to claim 2, characterised in that the spacer rings are plastics rings (7) projecting into annular grooves (5') in the pedal bearing axle (5).

4. Pedal bearing unit according to claim 3, characterised in that the plastics rings (7) are sprayed fixedly onto the pedal bearing axle (5).

5. Pedal bearing unit according to one of claims 1 to 4, characterised in that the short and long crank sleeves (3 and 2) as well as their end flanges ($2^{IV}$ and 6) are of plastics material, wherein the one end flange ($2^{IV}$) is positioned on the crank sleeve (2), whereas the other end flange (6) is welded on to the crank sleeve (2) after fitting of the pedal bearing axle (5) and the needle bearing (4).

6. Pedal bearing unit according to claim 5, characterised in that the welded-on end flange comprises a T-shape profiled ring (6) which projects into an annular groove ($2^{VI}$) provided in the adjacent end (2') of the long crank sleeve (2) (Fig.1).

7. Pedal bearing unit according to claim 5, characterised in that the welded-on end flange comprises a T-shape profiled ring (6) which is buttwelded onto the adjacent end (2') of the long crank sleeve (2) and externally lies flush with the end of the long crank sleeve (2) (Fig.3).

8. Pedal bearing unit according to one of claims 1 to 7, characterised in that sealing lips (6″) are provided on the end flanges ($2^{IV}$, 6) so as to project into contact with the pedal bearing axle (5).

**Revendications**

1. Ensemble de pédalier destiné à être monté dans des fourreaux de pédaliers de bicyclettes ou similaires, comportant un fourreau de montage, qui est formé d'un manchon à rebord long et d'un manchon à rebord court posé au niveau de ses extrémités, sur le précédent, et qui doit être enfoncé ou vissé dans le fourreau de pédalier, et un palier à roulement logé dans le manchon à rebord long dudit fourreau de montage, entre des brides d'extrémité reliées de façon solidaire au manchon et faisant saillie vers l'intérieur, et prévu pour l'axe de pédalier traversant de façon centrale le fourreau de montage, caractérisé en ce que le palier à roulement se compose d'un roulement à aiguilles (4) placé immédiatment entre l'axe de pédalier (5) et le manchon à rebord long (2), et s'étendant pratiquement sur toute la longueur de celui-ci.

2. Ensemble de pédalier selon la revendication 1, caractérisé en ce que les aiguilles de roulement (4') et les barrettes (4") de la cage de roulement prévues entre celles-ci sont placées entre des bagues d'écartement (7), disposées suivant un intervalle approprié sur l'axe de pédalier (5), qui pénètrent elles-mêmes dans des rainures de bordure internes (respectivement 2$^{V}$ et 6') de forme appropriée, au niveau des brides d'extrémité (respectivement 2$^{IV}$ et 6) reliées de façon solidaire au manchon à rebord long (2).

3. Ensemble de pédalier selon la revendication 2, caractérisé en ce que les bagues d' écartement sont formées par des bagues en matière plastique (7) pénétrant dans des rainures annulaires (5') de l'axe de pédalier (5).

4. Ensemble de pédalier selon la revendication 3, caractérisé en ce que les bagues en matière plastique (7) sont injectées à demeure sur l'axe de pédalier (5).

5. Ensemble de pédalier selon l'une des revendications 1 à 4, caractérisé en ce que les manchons à rebords court et long (respectivement 3 et 2) et leurs brides d'extrémité (2$^{IV}$, 6) sont réalisés en matière plastique, l'une (2$^{IV}$) des brides d'extrémité étant formée par moulage sur le manchon à rebord (2) tandis que l'autre (6) bride d'extrémité est soudée sur celui-ci après le montage de l'axe de pédalier (5) et du roulement à aiguilles (4).

6. Ensemble de pédalier selon la revendication 5, caractérisé en ce que la bride d'extrémité soudée se compose d'une bague profilée en T (6) qui pénètre dans une rainure annulaire (2$^{VI}$) prévue sur l'extrémité (2') du manchon à rebord long (2) tournée vers elle (fig. 1).

7. Ensemble de pédalier selon la revendication 5, caractérisé en ce que la bride d'extrémité soudée se compose d'une bague profilée en T (6) qui est soudée bord à bord sur l 'extrémité 2' du manchon à rebord long 2 qui est tournée vers elle, et qui forme avec le manchon à rebord long 2, à l'extérieur, une surface plane (fig. 3).

8. Ensemble de pédalier selon l'une des revendications 1 à 7, caractérisé en ce que des lèvres d'étanchéité (6") s'étendant jusqu'à l'axe de pédalier (5) sont formées sur les brides d'extrémité (2$^{IV}$, 6).

Fig.2

Fig.1

Fig.3

Fig.4